# DEMANDE DE BREVET EUROPEEN

(11) **EP 0 710 788 A1**
(43) Date de publication de la demande: **08.05.1996**
(21) Numéro de dépôt: 95402470.9
(22) Date de dépôt: 06.11.1995
(51) Int. Cl.: F16J 15/12, B60J 10/08

(54) **Armature interne pour joints d'étanchéité**

(30) Priorité: 07.11.1994 FR 19940013328
(71) Demandeur: STANDARD PRODUCTS INDUSTRIEL, F-95871 Bezons (FR)
(72) Inventeur: Paris, Roland, F-35500 Vitre (FR)
(74) Mandataire: Busnel, Jean-Benoît, et al

(57) **Abrégé**

L'invention concerne une armature interne pour joints d'étanchéité (J) dont une partie (G) au moins est à section en U à fibres neutres (F) qui est constituée d'une bande (1) rigide destinée à être étirée selon son axe longitudinal (X) et qui comprend une alternance de zones pleines transversales (11) reliées entre elles par des ponts longitudinaux (12) sensiblement parallèles et séparées par des zones évidées (10).

Selon l'invention, les ponts (12) sont situés sur les bords latéraux (1a) de la bande (1) et sont séparés les uns des autres par des fentes transversales (13) divisant les extrémités latérales des zones pleines (11) en au moins deux branches (11a,11b) dont l'une (11 a) est déformable par étirage de la bande (1).

## Description

La présente invention concerne une armature interne pour joints d'étanchéité ainsi qu'un procédé de fabrication d'une telle armature.

Il existe déjà des armatures internes pour joints d'étanchéité destinés notamment aux véhicules automobiles.

Ces armatures sont noyées au moins partiellement dans la matière élastomère ou plastomère constitutive du joint.

Afin de s'adapter aux différentes géométries des ouvertures de carrosserie, les armatures doivent être déformables dans les trois dimensions.

Elles doivent de plus admettre une légère élasticité longitudinale de façon à ce que la largeur des segments de joints soit toujours adaptée aux pourtours de leurs supports. Cette élasticité est obtenue par étirage de la bande préalablement à l'enrobage.

Dans le cas particulier de joints possédant au moins une partie à section en U telle qu'une pince d'ancrage, l'armature interne est alors constituée d'une bande rigide destinée à être étirée selon son axe longitudinal puis pliée pour former un profil en U. Cette bande comprend une alternance de zones pleines transversales reliées entre elles par des ponts longitudinaux sensiblement parallèles et séparées par des zones évidées. L'étirage produit un allongement substantiel du joint, et de son armature ce qui constitue un avantage économique.

Le profil en U obtenu doit posséder des fibres neutres c'est-à-dire des zones ou surfaces situées au niveau des courbures où les déformations axiales c'est-à-dire essentiellement la compression et l'extension, sont nulles quel que soit le rayon de courbure.

Lorsque les zones évidées sont réalisées par enlèvement de matière, l'armature a une capacité d'allongement axial extrêmement faible mais les fibres neutres sont situées sur les ailes de la section en U, ce qui peut présenter un intérêt dans les courbures.

Lorsque les zones évidées sont réalisées uniquement par des fentages, la capacité d'allongement est plus importante, mais les fibres neutres sont alors situées sur la partie centrale de la section en U.

Il n'est donc pas possible avec ces modes de réalisation d'obtenir à la fois un allongement de la bande après étirage et un positionnement des fibres neutres sur les ailes.

Une autre solution consiste à utiliser des fils rapportés ou fixés longitudinalement sur la bande. La position des fibres neutres est alors déterminée en fonction de la situation de ces fils.

Cependant, la fixation des fils rend les opérations de fabrication du joint plus longues et plus complexes.

En outre, de telles armatures sont hétérogènes en particulier lorsque les fils ne sont pas métalliques, ce qui entraîne des problèmes de cohésion avec la matière d'enrobage.

Enfin, l'élasticité longitudinale intrinsèque de la bande est limitée par la présence des fils qui introduisent nécessairement une certaine raideur.

La présente invention a pour but de résoudre ces problèmes techniques de manière satisfaisante.

Ce but est atteint selon l'invention au moyen d'une armature interne pour joints d'étanchéité dont une partie au moins est à section en U àfibres neutres qui est constituée d'une bande rigide destinée à être étirée selon son axe longitudinal et qui comprend une alternance de zones pleines transversales reliées entre elles par des ponts longitudinaux sensiblement parallèles et séparées par des zones évidées, caractérisée en ce que les ponts sont situés sur les bords latéraux de la bande et sont séparés les uns des autres par des fentes transversales divisant les extrémités latérales des zones pleines en au moins deux branches dont l'une est déformable par étirage de la bande.

Selon une caractéristique avantageuse, la largeur de la branche déformable est inférieure à celle des autres branches.

Selon un premier mode de réalisation, les zones évidées transversales sont formées de lumières centrales rectilignes

Selon une variante, les lumières centrales se prolongent latéralement par des ouvertures rétrécies raccordées aux lumières centrales par des bords curvilignes.

Selon une autre caractéristique, les fentes transversales débouchent sur les bords latéraux de la bande par des découpes cylindriques.

Selon encore une autre caractéristique, les fibres neutres ont une position variable le long de la bande pliée.

Un autre objet de l'invention est un procédé de fabrication d'une armature interne pour joint d'étanchéité à fibres neutres comprenant la réalisation d'une bande rigide comprenant selon son axe longitudinal une alternance de zones pleines transversales reliées entre elles par des ponts longitudinaux sensiblement parallèles et séparées par des zones évidées, caractérisé en ce qu'on réalise les ponts sur les bords latéraux de la bande en les séparant les uns des autres par des fentages transversaux de façon à diviser les extrémités latérales des zones pleines en au moins deux branches dont l'une est déformable par étirage de la bande.

Selon une caractéristique avantageuse de procédé, on détermine la position ultérieure des fibres neutres sur l'armature en ajustant au préalable la largeur des branches par rapport à la largeur des ponts adjacents et, le cas échéant, en modifiant au surplus la longueur des fentes.

On peut aussi faire varier la position des fibres neutres le long de la bande en modifiant localement le rapport des largeurs entre les branches déformables et les ponts adjacents.

Selon d'autres caractéristiques, on étire la bande selon son axe longitudinal puis on la plie selon un profil en U avant ou après enrobage par une matière élasto-mère ou plastomère.

Le procédé de l'invention permet de créer et de placer sélectivement les fibres neutres sur la bande dès sa réalisation et sans utiliser d'éléments complémentaires, simplement en adaptant le rapport des largeurs entre les branches déformables et les ponts.

Ainsi par exemple, lorsque l'on souhaite que les fibres neutres soient situées près des extrémités latérales de la bande pliée (formant les ailes de la section en U), on donnera aux branches déformables une largeur plus importante que celle des ponts.

Au contraire, si l'on souhaite que les fibres neutres soient positionnées près de la partie centrale, située entre les ailes, on réalisera les branches déformables avec une largeur inférieure à celle des ponts. Le déplacement vers la partie centrale sera alors d'autant plus accentué que les fentes auront une longueur plus importante.

Dans tous les cas, les fibres neutres sont situées en travers des fentes.

Bien entendu, on pourra aussi choisir de modifier localement le rapport de ces largeurs le long de la bande de façon à créer des fibres neutres dont la position est variable.

L'armature de l'invention est homogène et d'une seule pièce et possède un comportement très satisfaisant à l'enrobage.

Par ailleurs, la combinaison des lumières centrales, réalisées par enlèvement de matière et des fentages latéraux permet de déplacer les fibres neutres sur les ailes tout en obtenant un allongement économique de la bande.

L'armature peut être réalisée facilement et rapidement par un seul ou plusieurs outils de façonnage travaillant en mode automatique à poste unique ou multiple.

La présente invention sera mieux comprise à la lecture de la description qui va suivre, accompagnée des dessins sur lesquels :
- la figure 1a représente une vue de dessus d'une portion de la bande d'armature avant étirage, selon un premier mode de réalisation de l'invention ;
- la figure 1b représente une vue de dessus de la bande de la figure 1a après étirage ;
- la figure 1c représente une vue de profil de la bande étirée de la figure 1b après pliage en U ;
- la figure 2a représente une vue de dessus d'une variante de réalisation de la bande d'armature après étirage ;
- la figure 2b représente une vue de profil de la bande de la figure 2a après pliage en U ;
- les figures 3a et 3b représentent une vue de dessus d'une portion de la bande d'armature respectivement avant et après étirage, selon un second mode de réalisation de l'invention ;
- la figure 3c représente une vue de profil de la bande étirée de la figure 3b après pliage en U ; et,
- la figure 4 représente des vues en perspective de l'armature au cours des différentes étapes du procédé de l'invention.

L'armature représentée sur toutes les figures est destinée à être intégrée dans des joints d'étanchéité dont une partie au moins est à section en U et qui doit comporter des zones ou surfaces de déformation axiale nulle au niveau des courbures. Ces zones où la compression et l'extension n'ont pas d'effet sont généralement dénommées "fibres neutres".

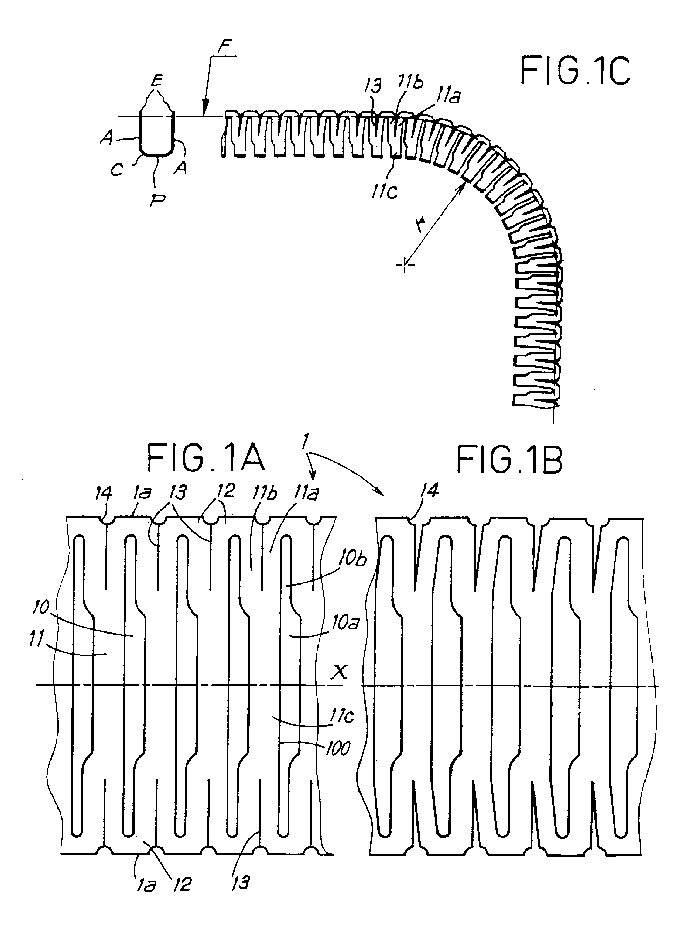

Cette armature interne est constituée d'une bande rigide 1 destinée à être étirée selon son axe longitudinal X puis pliée en U avant enrobage par une matière élastomère ou plastomère. Comme représentée sur les figures 1a, 1b et 1c, la bande 1 comprend une alternance de zones pleines transversales 11, reliées entre elles par des ponts longitudinaux 12 et séparées par des zones évidées 10.

Les ponts 12 sont situés sur les bords latéraux 1a de la bande 1 et sont séparés les uns des autres par des fentes transversales 13.

Les fentes 13 d'un premier bord latéral 1a sont alignées transversalement avec les fentes 13, réalisées sur l'autre bord latéral de la bande 1. Il existe donc une symétrie par rapport à l'axe longitudinal X.

Les fentes 13 divisent ainsi les extrémités latérales des zones pleines 11 en au moins deux branches 11a, 11 b.

La branche 11a possède une largeur inférieure à celle de la branche 11b ce qui la rend déformable par étirage de la bande 1 selon l'axe X. L'étirage produit un allongement de la bande 1 et de la matière qui l'enrobe. L'étirage produit également l'ouverture des fentes transversales 13 tandis que la branche 11b reste, quant à elle, droite et parallèle au corps central rectiligne 11 c de la zone pleine 11.

Les zones évidées 10 sont formées de lumières centrales rectilignes 10a.

Dans le mode de réalisation des figures 1 a et 1 b les lumières 10a se prolongent latéralement en direction des ponts 12 par des ouvertures rétrécies 10b.

Les ouvertures rétrécies 10b se raccordent aux lumières centrales 10a par au moins un bord curviligne qui délimite également le tronçon de rattachement 11d de la branche droite 11b au corps rectiligne 11c de la zone pleine 11.

Sur un premier côté, la zone évidée 10 est donc délimitée par le bord rectiligne du corps central 11c de la zone pleine 11, par les bords curvilignes des tronçons de rattachement 11d de la branche droite 11b et par les bords rectilignes des branches droites 11 b. De l'autre côté, la zone évidée 10 est délimitée par un bord continu 100 qui est rectiligne avant étirage et qui fléchit pendant l'étirage (figure Ib) par déformation de la branche 11a et ouverture des fentes 13.

De préférence, les fentes transversales 13 débouchent sur les bords latéraux 1a de la bande 1 par des découpes cylindriques 14.

La figure 1c représente la bande 1 étirée et pliée en U avant enrobage. Elle est par ailleurs cintrée localement selon un rayon de courbure r comme cela est le cas lorsque le joint est monté sur une portion courbe de carrosserie.

Lorsque la largeur de la branche déformable 1a est supérieure ou égale à celle des ponts 12 la section des branches 1a est plus résistante que celle des ponts 12 et les fibres neutres F de l'armature c'est-à-dire les zones de déformation nulle sont alors situées sur les ailes A de la section en U, au voisinage de leur extrémité libre E et en travers des fentes 13.

La partie centrale plane P située entre les ailes A du profil en U est constituée essentiellement des corps rectilignes 11c des zones pleines 11. Les tronçons coudés C reliant les ailes A à la partie centrale P, sont situés avant les branches 11a, 11b ce qui ne modifie ni le comportement déformable de la branche 11a ni la position des fibres neutres F.

En revanche, la position des fibres neutre F est déterminée en fonction des largeurs respectives des branches déformables 11 a par rapport à celles des ponts 12 adjacents.

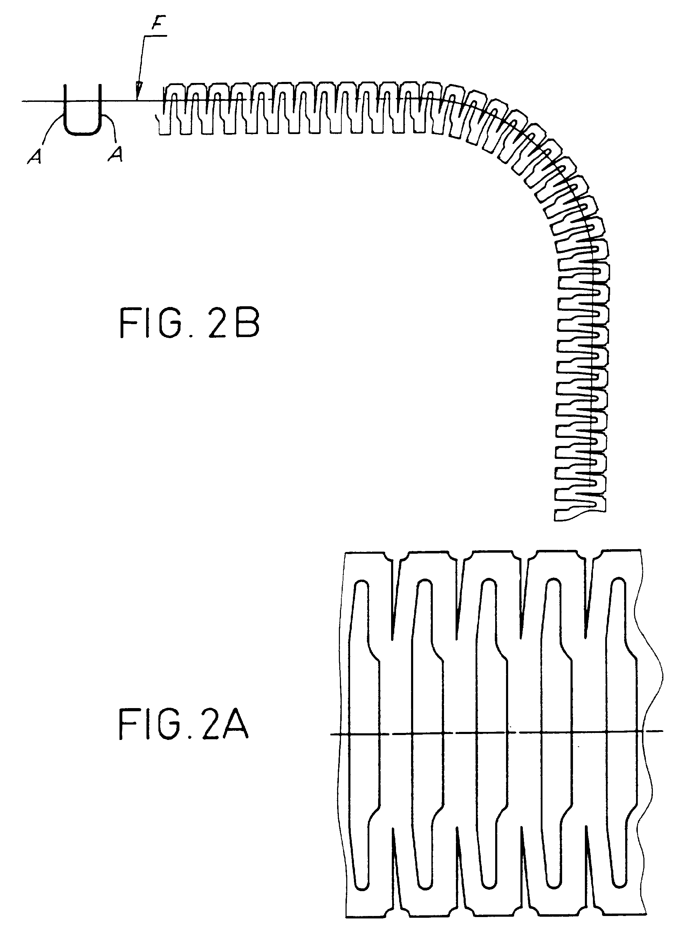

Comme le montrent les figures 2a et 2b à l'inverse du mode de réalisation des figures 1b et 1c, lorsque la largeur des branches déformables 11a est inférieure à celle des ponts 12, les fibres neutres F sont déplacées, sur les ailes A, vers la partie centrale P en étant toujours disposées en travers des fentes 13. Cependant, dans ce dernier cas, lorsque l'on augmente la longueur des fentes 13, on déplace encore plus les fibres neutres F vers la partie centrale P.

On peut ainsi faire varier la position des fibres neutres le long de l'armature en modifiant localement et, au préalable, le rapport des largeurs entre les branches déformables 11a et les ponts adjacents 12 lors de la réalisation de la bande 1 et, le cas échéant, en modifiant au surplus la longueur des fentes 13.

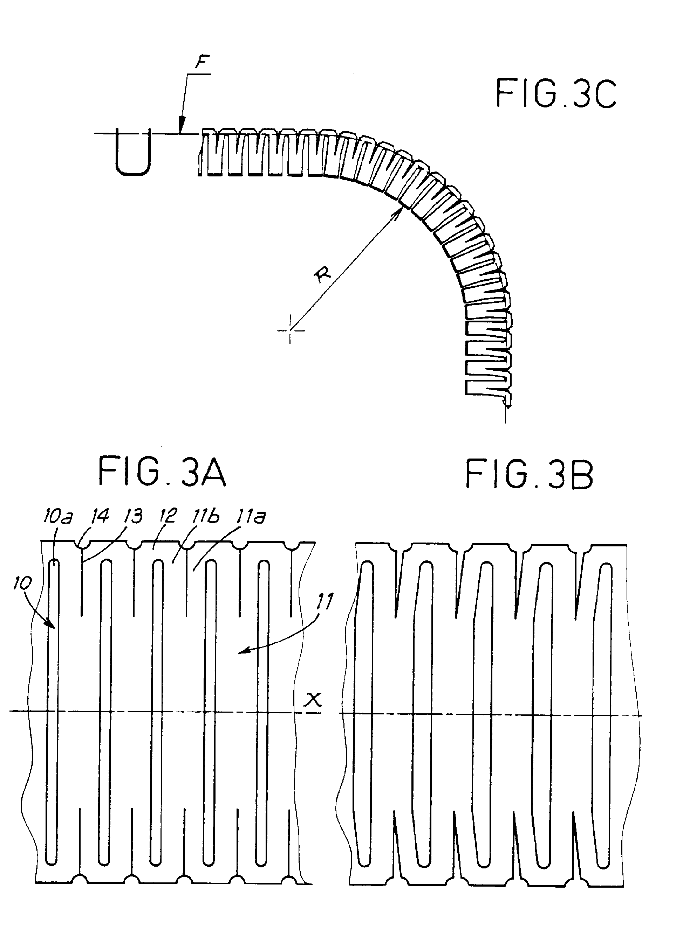

Les figures 3a, 3b et 3c représentent un autre mode de réalisation de l'invention dans lequel les zones évidées 10 sont constituées uniquement de lumières rectilignes transversales 10' à bords latéraux arrondis.

Les branches déformables 11a des zones pleines 11 sont celles dont la largeur est la plus faible. Comme la surface des zones évidées 10' des figures 3a et 3b est plus faible que celle des figures 1a et 1b, le rayon de courbure R selon lequel l'armature pourra être cintrée, est plus important que le rayon r.

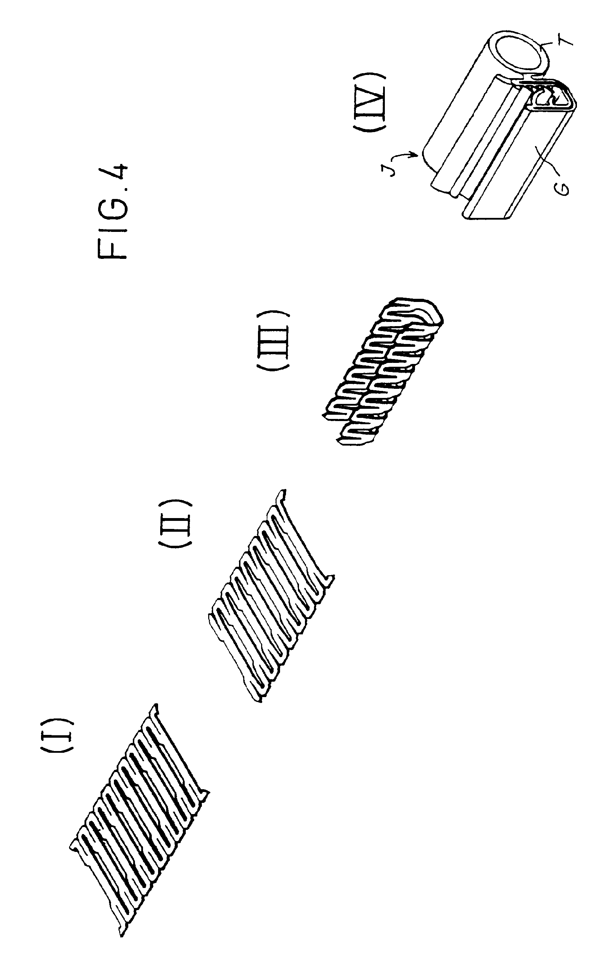

La figure 4 représente les différentes phases du procédé de fabrication de l'invention. Après réalisation (I) de la bande 1 celle-ci est étirée (II) selon son axe longitudinal X puis être avantageusement pliée (III) pour former un profil de section en U. L'enrobage (IV) de l'armature pliée et étirée dans une matière élastomère ou plastomère donne son aspect définitif à la pince d'ancrage G du joint J. Les autres éléments du joint tels qu'un élément d'étanchéité tubulaire T sont éventuellement coextrudés avec la pince pendant l'enrobage (IV).

## Revendications

1. Armature interne pour joints d'étanchéité (J) dont une partie (G) au moins est à section en U à fibres neutres (F) qui est constituée d'une bande (1) rigide destinée à être étirée selon son axe longitudinal (X) et qui comprend une alternance de zones pleines transversales (11) reliées entre elles par des ponts longitudinaux (12) sensiblement parallèles et séparées par des zones évidées (10), **caractérisée en ce que** les ponts (12) sont situés sur les bords latéraux (1a) de la bande (1) et sont séparés les uns des autres par des fentes transversales (13) divisant les extrémités latérales des zones pleines (11) en au moins deux branches (11a,11b) dont l'une (11a) est déformable par étirage de la bande (1).

2. Armature selon la revendication 1, **caractérisée en ce que** la largeur de la branche déformable (11a) est inférieure à celle des autres branches.

3. Armature selon l'une des revendications précédentes, **caractérisée en ce que** les zones évidées transversales (10) sont formées de lumières centrales rectilignes (10a).

4. Armature selon la revendication 3, **caractérisée en ce que** les lumières centrales (10a) se prolongent latéralement par des ouvertures rétrécies (10b) raccordées aux lumières centrales (10a) par des bords curvilignes.

5. Armature selon l'une des revendications précédentes, **caractérisée en ce que** les fentes transversales (13) débouchent sur les bords latéraux (1a) de la bande (1) par des découpes cylindriques (14).

6. Armature selon l'une des revendications précédentes, **caractérisée en ce que** les fibres neutres (F) ont une position variable le long de la bande (1) pliée.

7. Procédé de fabrication d'une armature interne pour joint d'étanchéité (J) à fibres neutres (F) comprenant la réalisation d'une bande rigide (1) comprenant selon son axe longitudinal (X) une alternance de zones pleines transversales (11) reliées entre elles par des ponts longitudinaux (12) sensiblement parallèles et séparées par des zones évidées (10), **caractérisé en ce qu'**on réalise les ponts (12) sur les bords latéraux (1a) de la bande (1) en les séparant les uns des autres par des fentages transversaux (13) de façon à diviser les extrémités latérales des zones pleines (11) en au moins deux branches (11a,11b) dont l'une (11 a) est déformable par étirage de la bande (1).

8. Procédé selon la revendication 7, **caractérisé en ce qu'**on détermine la position ultérieure des fibres neutres (F) sur l'armature en ajustant au préalable la largeur des branches (11a) par rapport à la largeur des ponts adjacents (12) et, le cas échéant, en modifiant au surplus la longueur des fentes (13).

9. Procédé selon la revendication 8, **caractérisé en ce qu'**on fait varier la position des fibres neutres (F) le long de la bande (1) en modifiant localement le rapport des largeurs entre les branches déformables (11a) et les ponts (12) adjacents.

10. Procédé selon l'une des revendications 7 à 9, **caractérisé en ce qu'**on étire la bande (1) selon son axe longitudinal (X) puis on la plie selon un profil en U avant ou après enrobage par une matière élastomère ou plastomère.
